# EUROPEAN PATENT APPLICATION

(11) **EP 2 042 475 A2**
(43) Date of publication of application: **01.04.2009**
(21) Application number: 08016831.3
(22) Date of filing: 25.09.2008
(51) Int. Cl.: C04B 41/48

(54) **Sealant composition for roofing slate**

(30) Priority: 26.09.2007 ES 200702527 P
(71) Applicant: BARNICES Y PINTURAS MODERNAS, S.A., 26300 Najera La Rioja (ES)
(72) Inventor: Albelda Prado, Francisco José, 26300 Najera (La Rioja) (ES); Tobias Caro, Miguel Angel, 26300 Najera (La Rioja) (ES); Minguez Plaza, David, 26300 Najera (La Rioja) (ES)
(74) Representative: Maslanka, Dorota

(57) **Abstract**

The present invention refers to a sealant composition for roofing slates that is based on dispersions in water, a process for the treatment for roofing slate tiles with said composition by means of physical-chemical drying, and the pieces of roofing slate thus obtained.

This present invention has the application in the field of building, especially for the treatment of roofing slate tiles where they are going to be used for roofing.

## Description

### AIM OF THE INVENTION

This present invention refers to a sealant composition for roofing slate with physical-chemical drying, based on aqueous dispersions, which has the possibility of reacting with another component external to the formula, depending on the hardness that is required by the product, and which provides lasting protection for the roofing slate pieces that have been treated with said composition. The present invention is also concerned with the method of application and drying of the sealant composition, so as to obtain the best results.

### BACKGROUND OF THE INVENTION

Roofing slate is a homogeneous rock, with a very fine grain, that is opaque, resistant and that can be easily cleaved into thin and flat sheets. It comes from complex clay deposits, generally silicon-aluminium.

Its composition is mainly clay minerals and laminar mica, which gives it a smooth structure and a break down into fine layers, which makes the clay roofing slate and phyllite a very suitable material from which to obtain elements for roofs or roofing slate roofing.

The roofing slate for roofing is absolutely suitable to give the characteristics demanded for the forming of a roofing element for buildings, but aesthetically, depending if it has incrustations of metallic minerals and salts it can have rusty stains on the surface once a certain time has elapsed after its placement.

The marketing of this type of roofing slate is limited and in some cases is not viable, for this reason the application of a surface protection is necessary on these types of roofing slates which are intended for the roofs on buildings. Traditionally a type of product based on the manual application of siloxane and with air drying has been used. This type of 'varnish' provides a good repellent action to water an initially prevents the oxidation of metallic salts on the surface. Regrettably, this protection is not lasting and in a relatively short period of time, less than 6 months depending on the climatic area, this coating disappears leaving the roofing slate surface without protection.

This is one of the reasons together with the industrialisation of this field and the need to increase production, that the development of a product that provides a lasting protection to the support has been developed, whilst seeking the minimum environmental impact from the application of same.

### DESCRIPTION OF THE INVENTION

The aim of this present invention is to make a sealant composition for roofing slate that has, by percentage of weight:

| | |
|---|---|
| Water dispersion | 50-80% |
| Coalescent | 5-15% |
| Additives | 1-10% |
| Grinding agent | 1-5% |
| Deionised water | 20-40% |
| External crosslinking agent | 0-5% |

The components that make up this formulation have differing options within a range of commercial substances that can be found on the market. Hence, generically the following commercial alternatives can be specified:
Water dispersion Neocryl^{®} , Albucryl^{®}, Craymul^{®}, Setalux^{®}, Neopac^{®}, Bayhydrol^{®}
Additives: Borchigel^{®}, Rheolate^{®}, Byk^{®}, Tegoairex^{®}, Hostavin^{®}, Surfynol^{®}, Dehydran^{®}, Troysol^{®}, Tinuvin^{®}
Grinding agent: Syloid^{®}, Acematt^{®}
Coalescent: Dowanol^{®}, Texanol^{®}.

In one embodiment of the invention, the percentages of the components of the sealant composition by weight are as follows:

| | |
|---|---|
| Water dispersion | 61.10% |
| Coalescent | 6.40% |
| Additives | 3.20% |
| Grinding agent | 1.80% |
| Deionised water | 25.50% |
| External crosslinking agent | 2% |

The present invention also has the aim of a process for the treatment of the roofing slate sheets, which is made up of the following stages;
a) Application of a sealant composition as previously described to the surface of a sheet of roofing slate, and
b) The drying of the sealant composition by physical drying at high temperature, and the subsequent curing by chemical crosslinking of the product.

In the application stage of the sealant composition of the invention to the surface of a sheet of roofing slate, the piece goes along the transport mechanism at a temperature of between 5° C and 35° C, and having a relative environmental humidity of less than 80%. The application of the sealant composition is carried out by means of several spray guns connected to a piece of equipment that pumps the product from the container. The equipment for the application can be aero-graphic or mixed. In the case of the aero-graphic application, the nozzles of the spray guns have diameters from 0.8 mm to 1.4 mm. the air pressure will be below 3 bars, and the product pressure will fluctuate from 0.2 to 2 bars so that the application is correct. In the case of the mixed system, the nozzles of the spray guns have passages from 7 to 13, the air pressure will be below 3 bars, and the product pressure will be below 90 so that the application is correct. The number of spray guns will vary from three to six depending on the type of piece to be applied, and will be placed in such a way that the application is carried out with the two sides and the edges being coated. The weight applied to each piece varies between 30 and 100 gr/m².

On the other hand, in the drying stage, once the pieces have had the application the pieces will go through an oven where they will stay for a variable time, at a temperature of between 40° C and 100° C depending on the gram weight applied to the piece. On exiting the oven the piece is dry so that it can be handled and pass through to the packaging area where the pieces are stacked for storage.

The present invention also has the aim of a piece of roofing slate obtained by means of the previously described process.

The sealant composition of the present invention gives the roofing slates some excellent properties of resistance to the oxidation of the metallic incrustations that are present on the surface. Said sealant composition has a good performance outside which makes it recommendable for application on those pieces of roofing slate which are going to be used for roofing.

On the other hand, the main advantage that is offered by the application of this hydro soluble product is the rapid drying at high temperatures that enable pieces to be stacked a few minutes after the application, and with working conditions that are not harmful for the workers and which respect the environment due to the minimal emission of volatile organic compounds into the atmosphere.

Hence, this hydro soluble product enables the varnishing to be finished in a matter of minutes whilst the other systems of drying would take hours or even days. The procedure described enables the sealant composition to be applied to the pieces, to dry and wrap them in a few minutes, depending on the installations. This is the main difference compared to the products based on siloxanes and with air drying. These types of products have a high content of solvents that need a time for evaporation and then the subsequent drying or hardening of the film of varnish.

On the other hand, and with the coming into force of the regulations for the reduction and elimination of the giving off of volatile organic compounds for new varnishing installations, the removal or reduction of solvents from formulations is necessary. There is a limit of 15 tons per year for the giving off of solvents; hence the product that is being developed has to avoid the consumption from exceeding this level. These types of commitments at the present time can only be guaranteed by certain products with an aqueous base. The sealant composition of the present invention has a content of volatile organic compounds that does not exceed 11%. The siloxanes with a content of solvents that is higher than 80% in the formulation are a long way from being able to fulfil this requirement.

### A DESCRIPTION OF A PREFERRED EMBODIMENT

There is a description below of a preferred embodiment, which is not however by way of being a limitation of the invention.

### 1. Example of a sealant composition preparation

A sealant composition was prepared that was made up with the compounds described below, with the percentage by weight.

| | | |
|---|---|---|
| Water dispersion | | 61.10% |
| | Add under agitation | |
| Coalescent | | 6.40% |
| Additives | | 3.20% |
| Grinding | agent | 1.80% |
| | Disperse the mix completely and add under agitation | |
| Deionised | water | 25.50% |
| | Add the cross linking with agitation just before applying the product | |
| External | crosslinking agent | 2% |

The product was not subjected to any type of transformation process or chemical reaction during the manufacture of same as a mixture of substances and a dispersion of solid particles is being dealt with in accordance with a pre-established order.

### 2. Example of _the treatment of roofing slate tiles with a sealant composition

Prior to carrying out the application of the product the roofing slate tiles were cleaned with compressed air to remove roofing slate particles that could have come loose in the machining of the pieces.

The properties of the sealant composition were optimised for an application system under which the main characteristics for their correct results and maximum protection were as follows:
Varnish temperature at the moment of the application: 5-35° C
Weight applied: 15 - 50 gr/m² for each side of the piece to be treated.

Application by mixed medium pressure aero-graphic means that are helped by air in the product application, or high pressure that are not helped by air during the product application.

Working speed: 8-20 m/min.

Drying time 90-120 seconds at 50 -100°C.

40 gr/m² of the sealant composition is applied to the clean and dry roofing slate tiles for example 1 by means of a system of spray guns helped by mixed medium pressure equipment; the pieces are passed through a drying oven with a vertical route at 65° - 80° C with a pass time of 120 seconds, subsequently going to a selection and wrapping machine.

## Claims

1. Roofing slate sealant composition **characterized in that** it has, in the percentage by weight:
| | |
|---|---|
| Water dispersion | 50-80% |
| Coalescent | 5-15% |
| Additives | 1-10% |
| Grinding agent | 1-5% |
| Deionised water | 20-40% |
| External crosslinking agent | 0-5% |

2. A sealant composition according to claim 1, where the percentages by weight are as follows:
| | |
|---|---|
| Water dispersion | 61.10% |
| Coalescent | 6.40% |
| Additives | 3.20% |
| Grinding agent | 1.80% |
| Deionised water | 25.50% |
| External crosslinking agent | 2% |

3. Process for the treatment of roofing slate pieces, which comprises the following stages:
a) Application of a sealant composition according to either of claims 1 and 2, to a surface of a roofing slate tile, and
b) The drying of the sealant composition by physical drying at high temperature, and the subsequent curing by chemical of the product.

4. Roofing slate tile obtained by means of the process according to claim 3.
